# EUROPÄISCHE PATENTSCHRIFT

(11) **EP 0 631 697 B1**
(45) Veröffentlichungstag und Bekanntmachung des Hinweises auf die Patenterteilung: **03.09.1997**
(21) Anmeldenummer: 93906569.4
(22) Anmeldetag: 19.03.1993
(51) Int. Cl.: H02M 3/158

(54) **SCHALTREGLERSYSTEM**
SWITCHING REGULATOR SYSTEM
SYSTEME REGULATEUR A DECOUPAGE

(30) Priorität: 20.03.1992 DE 4209053
(43) Veröffentlichungstag der Anmeldung: 04.01.1995
(73) Patentinhaber: TEMIC TELEFUNKEN microelectronic GmbH, 74072 Heilbronn (DE)
(72) Erfinder: SCHIRMER, Klaus, D-8070 Ingolstadt (DE); SCHILLINGER, Jakob, D-8074 Gaimersheim (DE); SIKORA, Gernot, D-8093 Rott (DE)
(74) Vertreter: Maute, Hans-Jürgen, Dipl.-Ing.
(86) Internationale Anmeldenummer: EP9300674
(87) Internationale Veröffentlichungsnummer: WO9319514

(56) Entgegenhaltungen:
- DE-A- 3 608 082
- DE-A- 3 628 138
- US-A- 4 618 812
- PATENT ABSTRACTS OF JAPAN vol. 5, no. 173 (P-87)(845) 5. November 1981 & JP-A-56 101 222

## Beschreibung

Die Erfindung betrifft ein Schaltreglersystem nach dem Oberbegriff des Anspruchs 1.

Schaltregler werden hauptsächlich als Gleichspannungswandler für kleine bis mittlere Leistungen eingesetzt. Liegt der Eingangsspannungsbereich unterhalb der Ausgangsspannung, so finden Abwärtswandler ihre Anwendung in den Schaltreglern. Ist andererseits der Eingangsspannungsbereich kleiner als die Ausgangsspannung, so werden Aufwärtswandler eingesetzt. Derartige Schaltregler sind z. B. aus U.Tietzen, Ch.Schenk, Halbleiterschaltungstechnik, Berlin, 1989, Kapitel 18.6, Seite 563 - 571 bekannt. Der dort beschriebene Abwärtswandler besteht aus einer Reihenschaltung eines Serienschalters mit einer Speicherdrossel. Der Eingang der Speicherdrossel ist mit einer Diode in Sperrichtung mit dem Massepotential verbunden. Am Ausgang der Spule L wird die Ausgangsspannung abgegriffen. Ein Glättungskondensator bestimmt die Welligkeit der Ausgangsspannung. Beim Aufwärtswandler wird der Speicherdrossel die Eingangsspannung direkt zugeführt. Ausgangsseitig ist die Speicherdrossel mit einem Masseschalter gegen Masse verbunden. Die Ausgangsspannung U_{A} wird über eine Diode in Flußrichtung abgegriffen. Ein Glättungskondensator sorgt auch hier für die Reduzierung der Ausgangswelligkeit. Um zu verhindern, daß die Ausgangsspannung bei kleinen Ausgangsströmen ansteigt, muß beim Aufwärts- und beim Abwärtswandler das verhältnis der Einschalt- und Ausschaltzeit entsprechend angepaßt werden. Die Erzeugung des impulsbreitenmodulierten Schaltsignals erfolgt mit zwei Modulen: einem Regelverstärker mit Spannungsreferenz und einem Pulsbreitenmodulator. Der Impulsbreitenmodulator besteht im allgemeinen aus einem Sägezahngenerator und einem Komparator. Der Komparator schaltet den Schalter ein, solange die Regelspannung größer ist als die Dreiecksspannung. Die dabei entstehende Steuerspannung ist eine Rechteckspannung mit fester Frequenz, deren Tastverhältnis von der Regelspannung abhängt.

Integrierte Pulsbreitenmodulatoren für Schaltregler sind z. B. aus Unitrode, Semiconductor Databook, 1987 - 1988, Seiten 12-6 bis 12-11 bekannt.

Diese bekannten Schaltregler weisen den Nachteil auf, daß je nachdem, ob der Eingangsspannungsbereich oberhalb oder unterhalb der Ausgangsspannung liegt, entweder ein Abwärts- oder ein Aufwärtswandler im Schaltregler verwendet wird.

Aus der US-PS 4,618,812 ist ein Schaltreglersystem bekannt, bei dem ein Aufwärtswandler und ein Abwärtswandler eine gemeinsame Drosselspule aufweisen und somit das Schaltreglersystem über einen weiten Bereich der Eingangsspannung eine konstante Ausgangsspannung liefert. Dabei kann die Eingangsspannung Werte annehmen, die kleiner oder größer als die Ausgangsspannung sind. Bei diesem bekannten Schaltreglersystem verbindet eine Reihenschaltung aus einem ersten Schalttransistor, einer Drosselspule und einer ersten Diode den Eingang mit dem Ausgang. Der Verbindungspunkt von Drosselspule und erster Diode ist durch einen zweiten Schalttransistor mit dem Massepotential verbunden. Der Verbindungspunkt vom ersten Schalttransitor und Drosselspule ist durch eine Diode mit dem Massepotential verbunden. Ein erster Komparator vergleicht die Ausgangsspannung mit einer Referenzspannung und steuert in Abhängigkeit des Vergleichsergebnisses einen Pulsweitenmodulator an, der wiederum die beiden Schalttransistoren ansteuert. Zwei weitere Komparatoren vergleichen die Eingangsspannung mit einer weiteren Referenzspannung und führen über jeweils einen weiteren Transistor in Abhängigkeit von dem jeweiligen Vergleichsergebnis das Steuersignal des ersten oder des zweiten Schalttransitors gegen das Massepotential ab. Auf diese Weise wird erreicht, daß, falls die Eingangsspannung kleiner ist als die Ausgangsspannung, das Schaltreglersystem als Aufwärtswandler und, falls die Eingangsspannung größer ist als die Ausgangsspannung, als Abwärtswandler arbeitet.

Aufgabe der Erfindung ist es daher, ein Schaltreglersystem, das einen breiten Eingangsspannungsbereich von unterhalb bis oberhalb der Ausgangsspannung zuläßt und über den gesamten Eingangsspannungsbereich eine konstante Ausgangsspannung liefert, anzugeben, bei dem ein fließender Übergang zwischen Aufwärts- und Abwärtsregler erreicht wird.

Diese Aufgabe wird gelöst durch ein Schaltreglersystem mit den kennzeichnenden Merkmalen des Anspruchs 1. Die vorteilhafte Ausgestaltung der Erfindung ergibt sich aus den Unteransprüchen.

Der breite Eingangsspannungsbereich von unterhalb bis oberhalb der Ausgangsspannung kann vom Schaltreglersystem aus geregelt werden, weil die Leistungsendstufe einen Abwärts- und einen Aufwärtswandler aufweist, die von einem Regelverstärker über einen Pulsbreitenmodulator angesteuert werden. Abwärts- und Aufwärtswandler benutzen die Speicherdrossel L gemeinsam. Dadurch ergibt sich zum einen der Vorteil, daß nur eine Speicherdrossel in die Schaltung aufgenommen werden muß und zum anderen wird der Übergang zwischen den beiden Teilwandlern verbessert. Gemäß der Erfindung weist die gemeinsame Speicherdrossel L zwei Endanzapfungen und zwei Mittenanzapfungen auf. Der Schalter des Abwärtswandlers T801 verbindet im geschlossenen Zustand die eingangsseitige Endanzapfung der Speicherdrossel L über eine erste Diode D801 mit dem Eingangsspannungspotential. Eine zweite Diode D802 verbindet den Eingang der Speicherdrossel mit dem Massepotential. Die ausgangsseitige Mittenanzapfung der Speicherdrossel L ist im geschlossenen Zustand des Schalters des Aufwärtswandlers T803 mit dem Massepotential verbunden. Auf der Ausgangsseite ist die Endanzapfung der Speicherdrossel L über eine dritte Diode D803 über einen Filterkondensator C mit Masse verbunden. Am Filterkondensator C wird die Ausgangsspannung gegen Masse abgegriffen. Ein weiterer Schalter T802 verbindet im geschlossenen Zustand die eingangsseitige Mittenanzapfung der Speicherdrossel L mit der Eingangsspannung U_{E}. Durch diese Maßnahme werden zwei an sich bekannte Wandlertypen, die vollkommen unterschiedliche Charakteristiken aufweisen, zu einem Schaltreglersystem verknüpft, welches einen erheblich ausgedehnten Regelbereich und einen fließenden Übergang zwischen den beiden Teilwandlern unter Ausnutzung einer gemeinsamen magnetischen Leistungskomponente aufweist.

Der Schalter des Abwärtswandlers T801 wird dabei durch das pulsbreitenmodulierte Steuersignal PWM des Pulsbreitenmodulators 500 angesteuert. Der Schalter des Aufwärtswandlers T803 und der weitere Schalter T802 werden nur dann angesteuert, wenn die Eingangsspannung U_{E} im unteren Bereich liegt.

In einer Weiterbildung der Erfindung ist ein Spannungsdetektor 101 vorgesehen, der ein Spannungsdetektionssignal LVD erzeugt, sobald die Eingangsspannung U_{E} unter einen vorgegebenen Wert fällt. Ist dies der Fall, so wird das pulsbreitenmodulierte Steuersignal in einer Logikstufe 300 mit einem Taktsignal zum Steuersignal VLV für den Aufwärtswandler verknüpft. Dem weiteren Schalter wird im unteren Eingangsspannungsbereich ein Steuersignal LVR zugeführt, welches sich durch die Verknüpfung von pulsbreitenmoduliertem Steuersignal und Spannungsdetektionssignals ergibt.

In einer vorteilhaften Ausgestaltung der Erfindung werden als Schalter der beiden Wandler Schalttransistoren verwendet. Diesen Schalttransistoren werden die zugeordneten Steuersignale PWM, LVR und VLV entweder an den Basiselektroden direkt zugeführt oder sie werden durch Stromquellen angesteuert, die ihrerseits von den jeweiligen Steuersignalen getaktet werden. Die letztere Möglichkeit hat den Vorteil, daß bei einem breiten Eingangsspannungsbereich ein sicherer Betriebszustand gewährleistet wird. Zur Beschleunigung der Einschaltdauer des angesteuerten Transistors wird die Konstantstromquelle für einen kurzen Augenblick beim Einschalten als Verstärker betrieben und der konstantstrombestimmende Widerstand im Emitterzweig der Konstantstromquelle mit einem Kondensator gebrückt. Diese Schaltungsanordnung verbessert erheblich das Schaltverhalten des angesteuerten Schalttransistors T801 - T803.

Im folgenden sei die Erfindung anhand der Figuren und eines Ausführungsbeispieles erläutert. Es zeigen:
- Figur 1: ein Blockschaltbild des erfindungsgemäßen Schaltreglersystems,
- Figur 2: ein Prinzipschaltbild der Dualendstufe,
- Figur 3: Einzelheiten verschiedener Schaltungsblöcke der Figur 1,
- Figur 3a: ein Ausführungsbeispiel der Dualendstufe,
- Figur 4 und 5: die Signalverläufe von Strom durch die Speicherdrossel und der Verlauf der Schaltsignale,
- Figur 6: Diagramme zum Signal-Timing,
- Figur 7, 8 und 9: das pulsbreitenmodulierte Signal PWM in Abhängigkeit von der Rampenfunktion,
- Figur 10: Einzelheiten des Regelverstärkers,
- Figur 11: ein Diagramm des Ladestrom des Rampengenerators,
- Figur 12: ein Diagramm der abgestuften Rampenfunktion,
- Figur 13: das Layout der Multilayer-Speicherdrossel,
- Figur 14: eine perspektivische Darstellung der Speicherdrossel nach Figur 13.

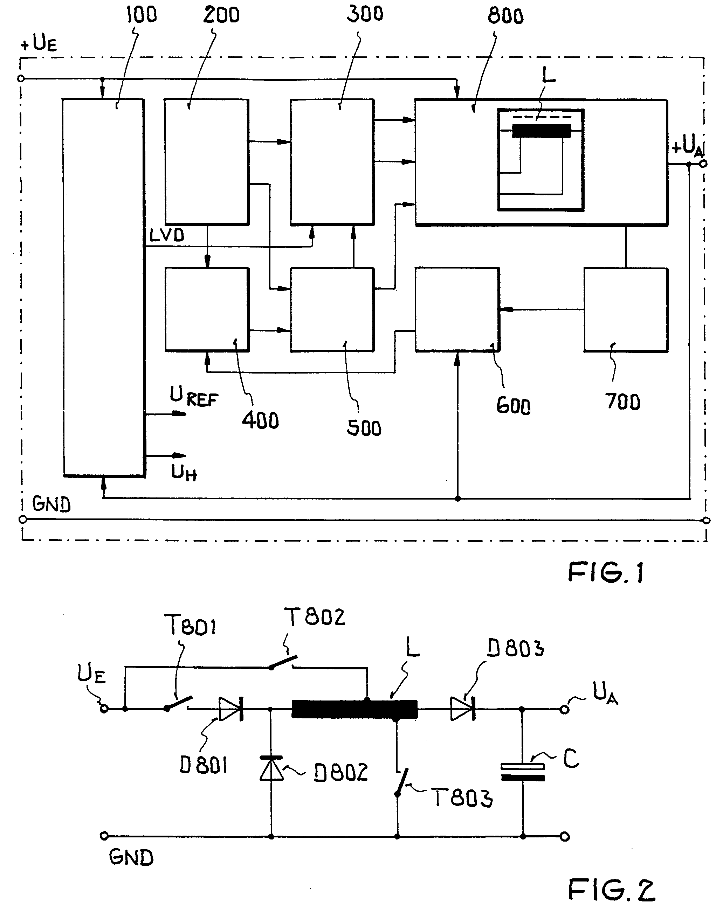

Die Figur 1 zeigt den Aufbau des Schaltreglersystems im Blockschaltbild. Einem Spannungsdekoder 100 wird die Eingangs- und die Ausgangsspannung zugeführt. An seinen Ausgängen liefert der Spannungsdekoder zum einen eine konstante Referenzspannung U_{ref}, die im allgemeinen kleiner ist als die kleinste erlaubte Eingangsspannung, eine Hilfsspannung U_{H}, die zur Spannungsversorgung der weiteren Schaltungsblöcke verwendet wird und ein Spannungsdetektionssignal LVD, das anzeigt, ob die Eingangsspannung in einem unteren Bereich liegt.

Eine Oszillatorstufe 200 liefert die Takte zum Betrieb eines Pulsbreitenmodulators 500, eines Rampengenerators 400 und einer Logikstufe 300.

Der Logikstufe 300 werden zusätzlich zu den Taktsignalen das impulsbreitenmodulierte Ausgangssignal PWM des Impulsbreitenmodulators 500 und das Spannungsdetektionssignal LVD des Eingangsspannungsdekoders zugeführt. Aus diesen Eingangssignalen generiert die Logikstufe 300 zwei Schaltsignale LVR und VLV, die der Dualendstufe 800 zugeführt werden.

Die Dualendstufe 800 besteht aus einer Leistungsendstufe mit Schaltwandlern, einer Induktivität zur Energiespeicherung und einem Ausgangsfilter zum Glätten der Ausgangsspannung U_{A}.

Die Rückkopplung der Ausgangsspannung U_{A} erfolgt über einen Regelverstärker 600, dessen Ausgang einen Rampengenerator 400 steuert. Die variable Rampenfunktion RG des Rampengenerators 400 wird zur Erzeugung eines impulsbreitenmodulierten Signals PWM mit einer festen Referenzspannung verglichen. Das Ausgangssignal PWM des Impulsbreitenmodulators 500 steuert die Leistungsschalter der Dualendstufe 800. Die nähere Funktionsweise der Dualendstufe wird weiter unten erläutert. Ein Uberstromsensor 700, der den Ausgangsstrom überwacht, begrenzt ab einem vorgewählten Ausgangsstrom I_{A} den Regelverstärker 600 derart, daß das Schaltreglersystem von einer Konstantspannungsregelung zur Konstantstromregelung umschaltet. Der Ausgangsstrom I_{A} wird auf einen maximalen Wert begrenzt, sobald der Ausgangsstrom I_{A} diesen maximalen Wert zu überschreiten droht.

Die Figur 2 zeigt das Funktionsprinzip der Dualendstufe 800. Im Mittelpunkt der Dualendstufe 800 steht die Speicherdrossel L, die neben den beiden Endanzapfungen noch zwei Mittenanzapfungen aufweist. Ein erster Schalter T801 bildet zusammen mit einer zweiten Diode D802, der Speicherdrossel L und einem Glättungskondensator C einen Abwärts- oder Step-down-Wandler. Bei genügend großer Eingangsspannung U_{E} wird nur der Schalter des Abwärtswandlers T801 über den Pulsbreitenmodulator 500 vom Regelverstärker angesteuert.

Ein Schalter T803 bildet zusammen mit der dritten Diode D803, der Speicherdrossel L und dem Glättungskondensator C einen Aufwärts- oder Buck-boost-Wandler. Der Aufwärtswandler erbringt seine höchste Leistung bei einem Tastverhältnis von 50 %. Das Schaltsignal VLV für den Schalter des Aufwärtswandlers T803 wird von der Logikschaltung 300 aus dem Taktsignal und dem impulsbreitenmodulierten Ausgangssignal des Impulsbreitenmodulators 500 generiert. Es fällt nach jeweils einer halben Periodendauer jedes Schaltzykluses ab, so daß der Schalter spätestens dann geöffnet wird. Die Einschaltdauer des Schalters des Aufwärtswandlers wird durch die Verknüpfung des Taktsignales mit dem Ausgangssignal des Impulsbreitenmodulators bestimmt. Da sich bei der Aufwärtswandlung die Rückschlagsspannung auf die Eingangsspannung addiert, ist es notwendig im Übergangsbereich zwischen Abwärts- und Aufwärtswandlung die Eingangsspannung U_{E} getastet abzuschalten. Dies erfolgt durch einen weiteren Schalter T802, der in geschaltetem Zustand die Eingangsspannung an eine Mittenanzapfung der Speicherdrossel anlegt. Angesteuert wird der weitere Schalter T802 durch das impulsbreitenmodulierte Ausgangssignal des Impulsbreitenmodulators 500. Dieses Signal wird dem Schalter nur dann zugeführt, wenn an der Logikstufe 300 gleichzeitig das Spannungsdetektionssignal LVD anliegt. Die Diode D801, die zwischen der Speicherdrossel und dem Schalter des Aufwärtsreglers in Sperrichtung liegt, verhindert den Rückwärtsbetrieb des Schalters T801.

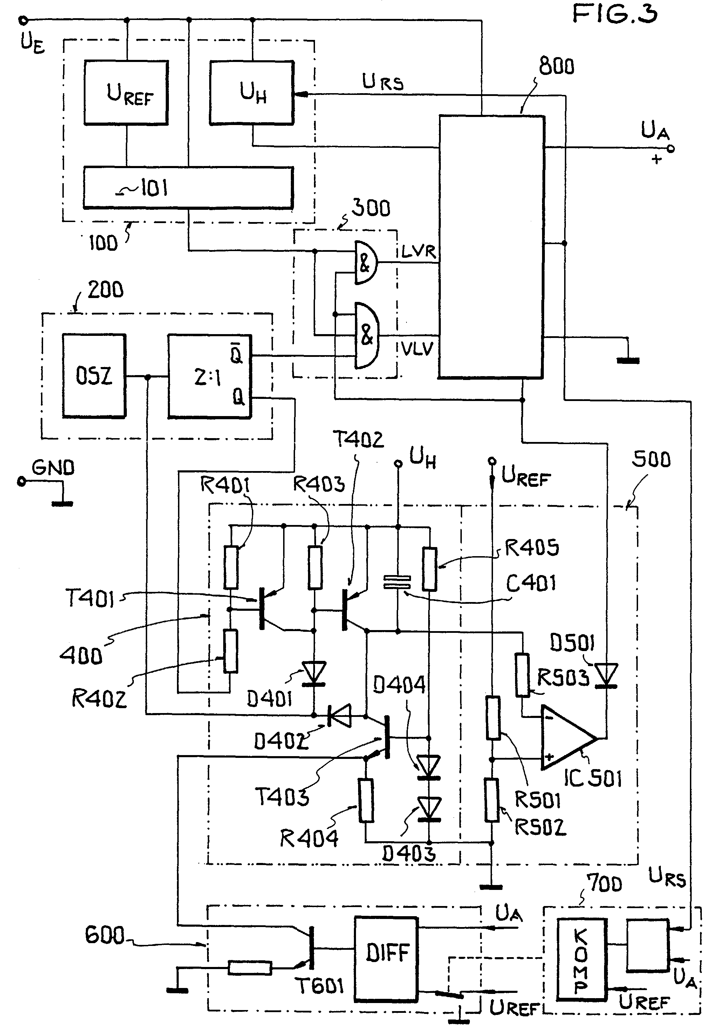

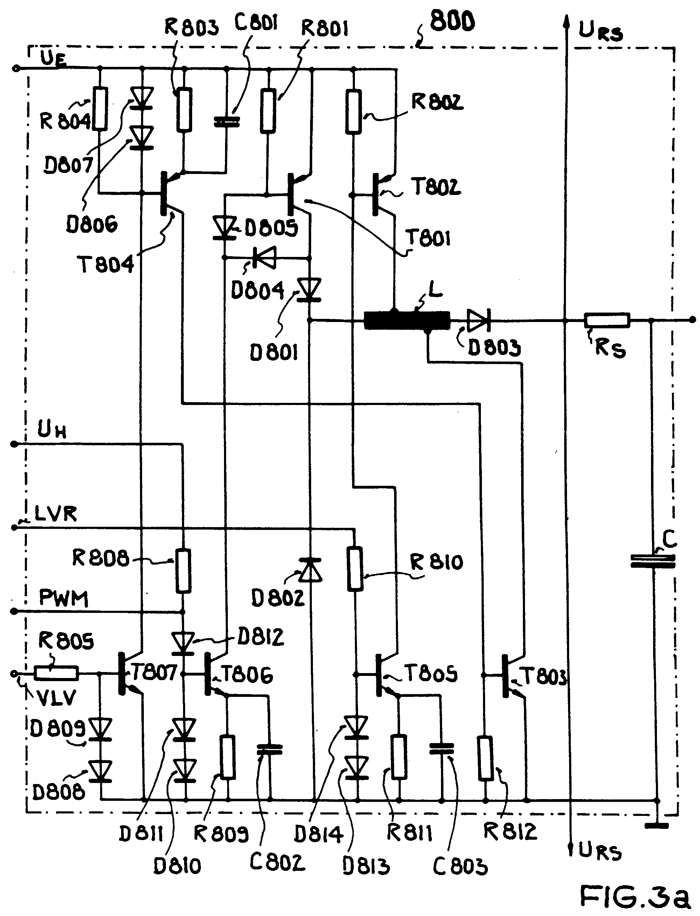

Die Figur 3 zeigt ein Ausführungsbeispiel eines erfindungsgemäßen Schaltreglersystems. Dabei sind der Spannungsdekoder 100, die Oszillatorstufe mit Oszillator und Frequenzteiler, der Regelverstärker 600 und der Uberstromsensor 700 lediglich als Blockschaltbild dargestellt, während die übrigen Schaltungsblöcke im Detail ausgeführt sind. Das Detail der Dualendstufe 800 ist in der Figur 3a dargestellt. Der Eingangsspannungsdekoder 100 bildet aus der Eingangsspannung U_{E} die Referenzspannung U_{REF}, die kleiner ist als die kleinste erlaubte Eingangsspannung. Die Referenzspannung U_{REF} wird in den übrigen Schaltungsblöcken als Spannungsreferenz verwendet. Aus der Differenz von Eingangsspannung U_{E} und Referenzspannung U_{ref} wird im Spannungsdetektor 101 das Spannungsdetektionssignal LVD gebildet, das anzeigt, ob die Eingangsspannung im unteren Spannungsbereich liegt. Je nach Größe der Eingangsspannung U_{E} wird entweder aus der Eingangsspannung U_{E} oder der Ausgangsspannung U_{A} eine Hilfsspannung U_{H} gewonnen, die kleiner ist als die Ausgangsspannung U_{A} und die im wesentlichen zur Spannungsversorgung der unterschiedlichen Schaltungsblöcke im Schaltreglersystem verwendet wird. Um bei dem geforderten, hohen Eingangsspannungsbereich eine stabile Referenz- und Hilfsspannung zu erhalten, wird beispielsweise je eine Präzisions-Zenerdiode über je eine Konstantstromquelle betrieben.

Die Oszillatorstufe 200 enthält einen Oszillator OSZ und eine Frequenzteilerstufe und ist so ausgestaltet, daß an einem ersten Ausgang die Grundschwingung, an einem zweiten bzw. dritten Ausgang Q, Q die frequenzhalbierte Grundschwingung bzw. die invertierte frequenzhalbierte Grundschwingung zur Verfügung gestellt wird.

Die Logikstufe 300 besteht aus zwei UND-Gattern mit jeweils zwei bzw. drei Eingängen. Im ersten UND-Gatter wird das Spannungsdetektionssignal LVD des Spannungsdekoders 101 mit dem Ausgangssignal des Impulsbreitenmodulators 500 zum Schaltsignal LVR für den weiteren Schalter T802 verknüpft. Für den Fall, daß die Eingangsspannung U_{E} im unteren Spannungsbereich liegt, wird folglich der Schalter T802 analog zum Ausgangssignal des Impulsbreitenmodulators 500 geschaltet. Liegt die Eingangsspannung oberhalb dieses Bereichs bleibt der weitere Schalter T802 offen.

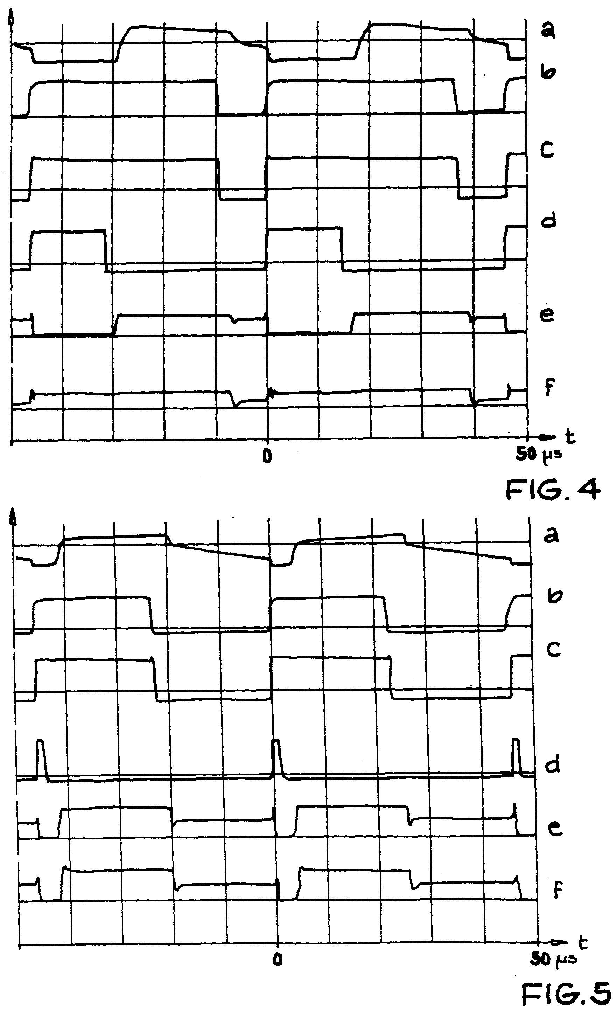

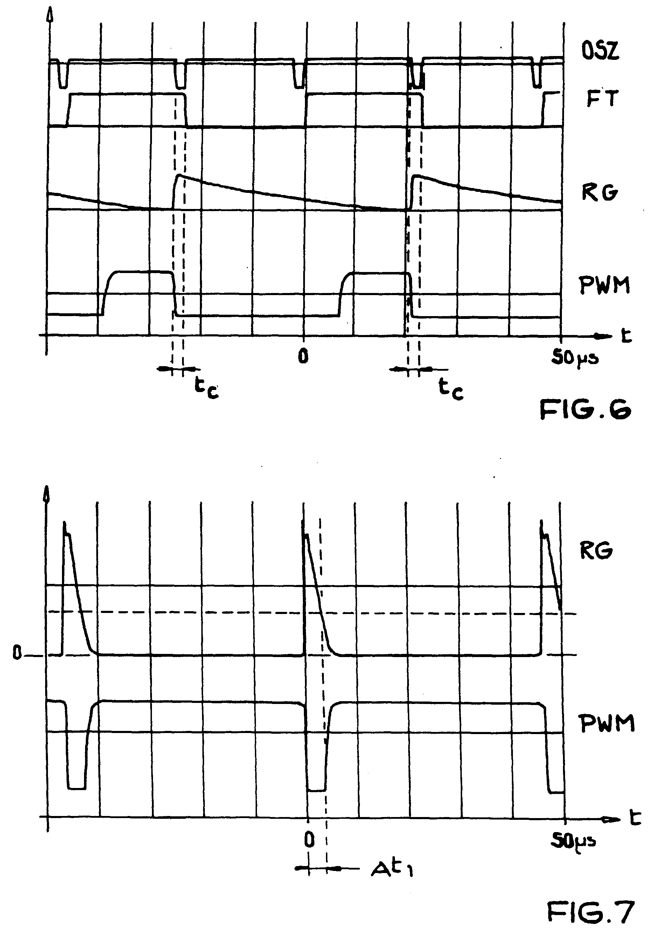

Im zweiten UND-Gatter wird das Spannungsdetektionssignal LVD mit dem Ausgangssignal des Impulsbreitenmodulators 500 und zusätzlich mit der invertierten frequenzhalbierten Grundschwingung Q der Oszillatorstufe zum Schaltsignal VLV für den Schalter des Aufwärtswandlers T803 verknüpft. Liegt die Eingangsspannung U_{E} im unteren Spannungsbereich, so wird der Schalter des Aufwärtswandlers T803 nur während der ersten Hälfte der Periodendauer der Schaltfrequenz analog zum Ausgangssignal des Impulsbreitenmodulators 500 geschaltet. Während der zweiten Hälfte der Periode der Schaltfrequenz bleibt der Schalter des Aufwärtswandlers offen, so daß die in der Speicherdrossel gespeicherte Energie an den Filterkondensator C abgegeben werden kann. Liegt die Eingangsspannung U_{E} oberhalb des unteren Spannungsbereichs, was durch ein fehlendes Spannungsdetektionssignal LVD angezeigt wird, bleibt der Schalter des Aufwärtsreglers ebenfalls offen und das Schaltreglersystem arbeitet als einfacher Abwärtswandler. Die entsprechenden Impulsdiagramme sind in den Figuren 4 und 5 dargestellt. Dabei zeigen jeweils die Diagramme: a) den Stromverlauf durch die Speicherdrossel, b) das Ausgangssignal PWM des Impulsbreitenmodulators 500, c) das Schaltsignal LVR für den weiteren Schalter T802, d) das Schaltsignal VLV für den Schalter des Aufwärtswandlers, e) den Spannungsverlauf am Verbindungspunkt des weiteren Schalters zur Speicherdrossel und f) den Spannungsverlauf am Verbindungspunkt des Schalters des Aufwärtswandlers T803 mit der Speicherdrossel. Bei beiden Figuren liegt die Eingangsspannung U_{E} jeweils im unteren Spannungsbereich. Bei den Diagrammen der Figur 4 ist die Eingangsspannung U_{E} kleiner als bei der Figur 5, was auch durch die Breite des Schaltsignals VLV für den Schalter des Aufwärtswandlers dargestellt wird. Dieser Impuls ist in der Figur 5d) kleiner als in der Figur 4d).

Das Schaltreglersystem weist drei Schaltzustände der Endstufe auf, die eine Funktion der Eingangsspannung U_{E} sind und fließend ineinander übergehen. Die Umschaltung zwischen den Schaltzuständen erfolgt in Abhängigkeit von der Eingangsspannung U_{E} im wesentlichen durch die Logikstufe 300.

Bei minimaler Eingangsspannung U_{E} arbeitet nur der dritte Schalter T803 im getasteten Betrieb, da der Pulsbreitenmodulator die maximale Pulsbreite abgibt. Die Logikstufe 300 sorgt dafür, daß der Aufwärtswandler L, T803, D803 mit der größten Energieübertragung arbeitet. Beim Öffnen des dritten Schalters T803 wird die in der Induktivität gespeicherte Energie auf die Eingangsspannung U_{E} aufgestockt. Nimmt die Eingangsspannung etwas zu, so unterbricht der zweite Schalter T802 das Aufstocken, wenn die Änderung des Tastverhältnisses nicht zum Ausregeln des Schaltreglersystems ausreicht. In diesem Arbeitsbereich verhindert die erste Diode D801 den inversen Betrieb des ersten Schalters T801. Liegt die Eingangsspannung U_{E} oberhalb des unteren Spannungsbereichs, so bleiben der zweite und dritte Schalter T802, T803 aufgrund des Fehlens des Spannungsdetektionssignals gesperrt, währenddessen der erste Schalter T801 mit varibalem Tastverhältnis angesteuert wird. In diesem Arbeitsbereich ist nur der Abwärtswandler T801, D802, L in Betrieb.

Der Rampengenerator 400 bildet zusammen mit dem Impulsbreitenmodulator 500 einen wichtigen Funktionsblock im Schaltreglersystem nach der Figur 3. Während herkömmliche Impulsbreitenmodulatoren einen variablen Schwellwert mit einer definierten Rampe eines Sägezahngenerators vergleichen, ist bei dem hier vorliegenden Schaltreglersystem vorgesehen, daß eine Rampenfunktion RG fester Frequenz und variabler Flanke mit einer definierten Referenzspannung verglichen wird. Da Operationsverstärker, die als Komparatoren asymmetrisch gespeist werden, an den beiden Eingängen nicht um den Nullpunkt betrieben werden können, ergibt sich bei Impulsbreitenmodulatoren nach dem Stand der Technik das Problem, daß die variable Schwelle nicht gegen Null gehen kann und somit die minimale Impulsbreite des Impulsbreitenmodulators erheblich eingeschränkt ist. Wird jedoch eine variable Flanke der Rampenfunktion RG mit einer festen Schwelle verglichen, so sind die minimale bzw. maximale Impulsbreite des Ausgangssignals des Impulsbreitenmodulators 500 nur von der minimalen bzw. maximalen Steigung der Rampenflanke abhängig.

Zur Erzeugung der Rampenfunktion RG mit fester Frequenz und variabler Rampenflanke wird dem Rampengenerator 400 die Grundfrequenz und die frequenzhalbierte Grundfrequenz der Oszillatorstufe 200 zugeführt. Die beiden Signalverläufe sind in den Impulsdiagrammen OSZ und FT der Figur 6 dargestellt. Überschneidet sich für die Zeitdauer TC der Impuls der Oszillatorgrundfrequenz OSZ mit der halben Grundfrequenz FT des Frequenzteilers, so wird der Kondensator C401 über den Transistor T402 während der Zeit TC entladen. Dieser Vorgang erfolgt periodisch mit der Frequenz der halbierten Grundschwingung und markiert die fast senkrecht ansteigende feste Flanke der Rampenfunktion RG. Während der übrigen Zeit der Periodendauer wird der Kondensator C401 über einen weiteren Transistor T403 und eine regelbare Stromquelle T601 des Regelverstärkers aufgeladen. Dadurch ergibt sich am Verbindungspunkt des Kondensators C401 mit der Stromquelle T601 die in der Figur 6 gezeigte Rampenspannung RG mit fester Frequenz und variabler Rampenflanke. Die Steilheit der Rampenflanke kann über den von der regelbaren Stromquelle T601 erzeugten Ladestrom eingestellt werden. Die flachste Steigung ergibt sich im Ausführungsbeispiel nach der Figur 3 aus der Größe des Widerstandes R404, der den Emitter des Transistors T403 mit Masse verbindet. Auf der anderen Seite wird die maximale Steilheit der Rampenflanke durch die Größe des Emitterwiderstands R614 der regelbaren Ladestromquelle T601 begrenzt.

Der Impulsbreitenmodulator 500 besteht im vorliegenden Ausführungsbeispiel nach Figur 3 im wesentlichen aus einem als Komparator beschalteten Operationsverstärker IC501, der die Rampenfunktion mit fester Frequenz und variabler Rampenflanke mit einer fest definierten Spannungsreferenz vergleicht. Fällt die Rampenspannung unter die Spannungsreferenz, so steigt die Ausgangsspannung des Operationsverstärkers IC501 sprunghaft an. Steigt die Rampenfunktion infolge des Entladens des Kondensators C401 wieder an, so wird der Spannungsimpuls am Ausgang des Operationsverstärkers IC501 beendet.

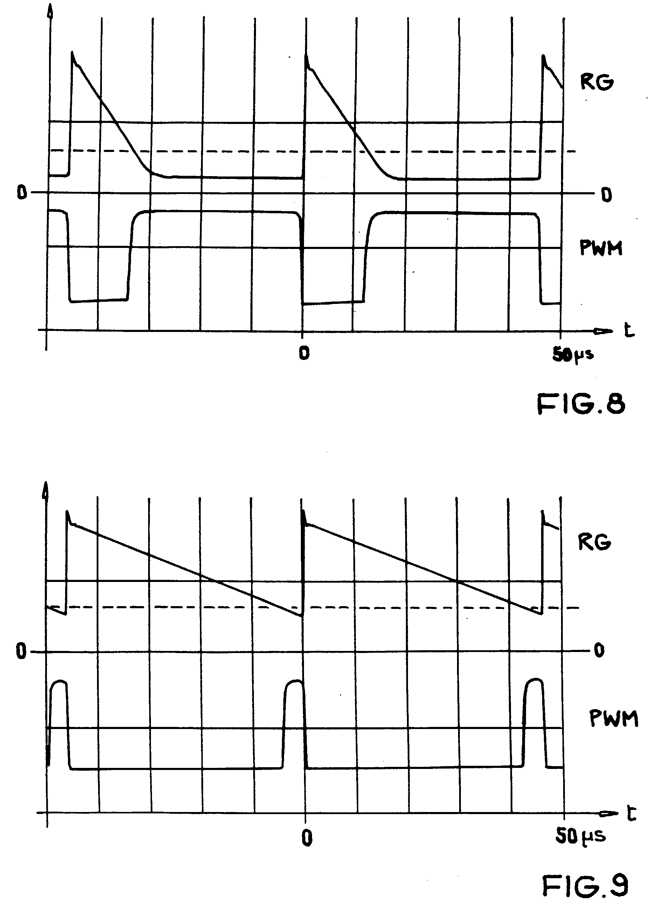

In Figur 6 ist das Ausgangssignal PWM des Impulsbreitenmodulators 500 zusammen mit der Rampenfunktion RG und den Taktsignalen FT und OSZ der Oszillatorstufe dargestellt. Die Figuren 7, 8 und 9 zeigen verschieden breite Ausgangsimpulse des Pulsbreitenmodulators 500 in Abhängigkeit von der Rampenfunktion RG bei fest eingestellter Referenzspannung. Die Referenzspannung ist in den Figuren als gestrichelte horizontale Linie eingezeichnet. Es wird deutlich, daß die maximale Impulsbreite von der minimalen Lade- und Entladezeit des Kondensators C401 abhängig ist, während die minimale Impulsbreite auch gegen Null gehen kann. In diesem Fall wird der Kondensator C401 innerhalb der Periodendauer der Rampenfunktion nicht mehr so weit geladen, daß die Spannung kleiner ist als die Referenzspannung.

Die Figur 3a zeigt ein Ausführungsbeispiel der Dualendstufe 800, deren prinzipieller Aufbau bereits anhand der Figur 2 erläutert wurde. Die Funktion der Schalter T801 - T803 wird hier von den entsprechenden Transistoren T801 - T803 übernommen. Dem ersten Transistor T801 wird am Emitter die Eingangsspannung U_{E} zugeführt. Der Kollektor ist mittels einer ersten, in Flußrichtung geschalteten Diode mit der eingangsseitigen Endanzapfung der Speicherdrossel verbunden. Die zweite Diode D802 verbindet die eingangsseitige Endanzapfung der Speicherdrossel L in Sperrichtung mit dem Massekontakt. Die Basis des Transistors T801 ist mit der von dem Transistor T806 gebildeten ersten Konstantstromquelle verbunden. Der Transistor T806 wird vom Ausgangssignal des Impulsbreitenmodulators 500 getaktet, so daß auch der als Schalter des Abwärtsregler arbeitenden Transistors T801 vom impulsbreitenmodulierten Signal PWM getaktet wird. Der Transistor T801 bildet zusammen mit der zweiten Diode D802 und der Speicherdrossel L den Teil der Endstufe, der bei genügend hoher Eingangsspannung als reiner Abwärts- oder Step-down-Wandler arbeitet. Dann nämlich sind die beiden UND-Gatter der Logikstufe 300 durch das Fehlen des Spannungsdetektionssignals gesperrt und an die beiden anderen Schalter der Dualendstufe T802, T803 gelangt kein Schaltsignal.

Der dritte Transistor T803 ist an seinem Emitteranschluß mit dem Massepotential verbunden. Der Kollektor ist mit der ausgangsseitigen Mittenanzapfung der Speicherdrossel L verbunden. Zusammen mit der dritten Diode D803, die die ausgangsseitige Endanzapfung der Speicherdrossel in Flußrichtung mit dem Filterkondensator C verbindet, bildet diese Anordnung für sich genommen einen Aufwärts- oder Buck-boost-Wandler. Angesteuert wird der dritte Schalttransistor T803 über zwei weitere getaktete Stromquellen mit Einschaltübersteuerung T804, T807 vom Schaltsignal VLV des zweiten UND-Gatters der Logikstufe 300. Da an einem Eingang des zweiten UND-Gatters die halbe Grundfrequenz anliegt, ist sichergestellt, daß der dritte Schalttransistor mit einer maximalen Schaltrate von 50 % der Periodendauer getaktet wird. Bei diesem Tastverhältnis erbringt der Aufwärtswandler seine höchste Leistung. Da dem zweiten UND-Gatter an einem weiteren Eingang das Spannungsdetektionssignal LVD des Spannungsdekoders 101 zugeführt wird, arbeitet der Aufwärtswandler nur wenn die Eingangsspannung im unteren Spannungsbereich liegt. Im Ubergangsbereich, der zwischen der Arbeitsweise als reiner Aufwärtswandler mit einem Tastverhältnis von 50 % und der Arbeitsweise als reiner Abwärtswandler liegt, ist es notwendig die Eingangsspannung U_{E} getastet abzuschalten, und die Ausgangsspannung U_{A} konstant zu halten.

Diese Aufgabe erfüllt der zweite Schalttransistor T802, der mit seinem Emitteranschluß mit der Eingangsspannung U_{E} verbunden ist. Der Kollektor ist mit der eingangsseitigen Mittenanzapfung der Speicherdrossel L verbunden. Angesteuert wird der zweite Schalttransistor T802 über eine weitere getaktete Stromquelle T805 vom Schaltsignal LVR des ersten- UND-Gatters der Logikstufe 300. Da das erste UND-Gatter der Logikstufe 300 das Spannungsdetektionssignal LVD des Spannungsdetektors 101 mit dem Ausgangssignal PWM des Impulsbreitenmodulators 500 verknüpft, wird der zweite Schalter im unteren Bereich der Eingangsspannung U_{E} mit dem Signal des Impulsbreitenmodulators PWM geschaltet. Das hat zur Folge, daß das maximale Tastverhältnis von 50 % des Aufwärtswandlers um die Ausschaltzeit des Impulsbreitenmodulators 500 reduziert wird und gleichzeitig die Eingangsspannung U_{E} von der Speicherdrossel L abgeschaltet ist. Die Diode zwischen dem ersten Schalttransistor T801 und der eingangsseitigen Endanzapfung der Speicherdrossel L verhindern den Inversbetrieb des ersten Schalttransistors T801 beim Aufwärtswandlerbetrieb.

Durch die Ansteuerung der Schalttransistoren T801 - T803 über getaktete Stromquellen mit Einschaltübersteuerung ist ein sicheres Durchschalten der Schalttransistoren über den weiten Eingangsspannungsbereich sichergestellt. Hierzu ist der Emitter des Stromquellentransistors mit einer Parallelschaltung von einem Widerstand und einem Kondensator mit der Eingangsspannung bzw. mit dem Massepotential verbunden. Der strombestimmende Emitterwiderstand ist bis zur Aufladung des parallelgeschalteten Kondensators unwirksam. Die Schaltung arbeitet zunächst als Verstärker und geht anschließend in Konstantstrombetrieb über. Derartige getaktete Stromquellen mit Einschaltübersteuerung sind in der Schaltung nach Figur 3a mehrfach vorhanden und beschleunigen das Schaltverhalten der so angesteuerten Schalttransistoren T801 - T803.

Die an der ausgangsseitigen Endanzapfung der Speicherdrossel L erhaltene Spannung wird vom Filterkondensator C zur Ausgangsspannung U_{A} geglättet. Die Ausgangsspannung U_{A} wird einem Regelverstärker 600 zugeführt und dort mit einer Spannungsreferenz verglichen. Der Regelverstärker steuert über eine regelbare Ladestromquelle T601 den Ladestrom des Rampengenerators 400 und somit über die Steilheit der variablen Rampenflanke das Tastverhältnis des Impulsbreitenmodulators.

Im Ausgangszweig der Dualendstufe 800 befindet sich außerdem ein Stromsensorwiderstand RS. Die Spannung U_{RS}, die am ersten Ende des Widerstandes RS anliegt, wird vom Uberstromsensor 700 mit der Ausgangsspannung U_{A} am anderen Ende des Widerstands verglichen. Die Differenz der beiden Spannungen ist ein Maß für die Größe des Ausgangsstromes I_{A} des Schaltreglersystems und wird mit einer Spannungsreferenz verglichen. Übersteigt der Ausgangsstrom I_{A} einen maximal zulässigen Wert, so begrenzt der Uberstromsensor 700 die Spannungsreferenz des Regelverstärkers 600. Auf diese Weise geht das Schaltreglersystem bei einem maximalen Ausgangsstrom I_{Amax} von einem Konstantspannungsregelverhalten in ein Konstantstromregelverhalten über. Dadurch wird die Kurzschlußfestigkeit des Schaltreglersystems erzielt.

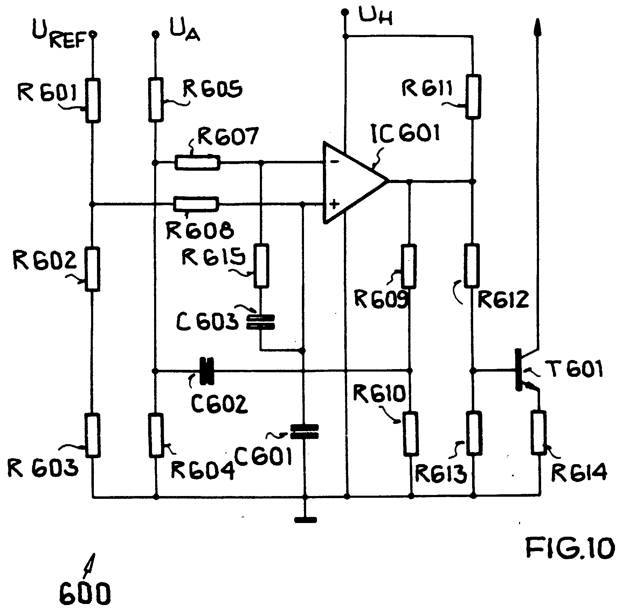

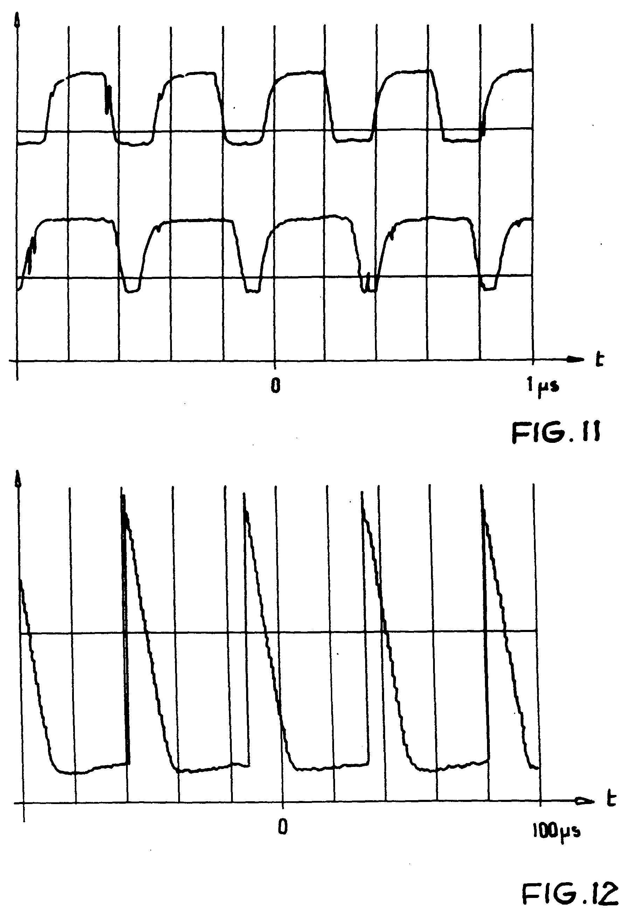

Die Figur 10 zeigt eine besonders vorteilhafte Ausgestaltung des Regelverstärkers 600. Der Regelverstärker 600 steuert über die Ladestromquelle T601 den Ladestrom des flankenbestimmenden Kondensators C401 des Rampengenerators 400. Um ein exaktes Vergleichsergebnis zwischen der variablen Rampenfunktion und dem festen Schwellwert zu erzielen, ist es vorteilhaft die Rampenflanke mit einer Vielzahl von Stufen zu versehen. Die Generierung der Stufen in der varibalen Rampenflanke kann z. B. auf digitalem Wege erfolgen. Im vorliegenden Ausführungsbeispiel erfolgt die Abstufung der Rampe durch eine gepulste Ansteuerung der Ladestromquelle T601. Die Figur 11 zeigt den Strom durch die Ladestromquelle T601 in Abhängigkeit von der Zeit für zwei verschiedene Regelabweichungen. Der Regelverstärker 600 nach Figur 10 ist so ausgelegt, daß der Differenzverstärker IC601 Eigenschwingungen ausführt, deren Frequenz ein Vielfaches der Rampenfrequenz entspricht.

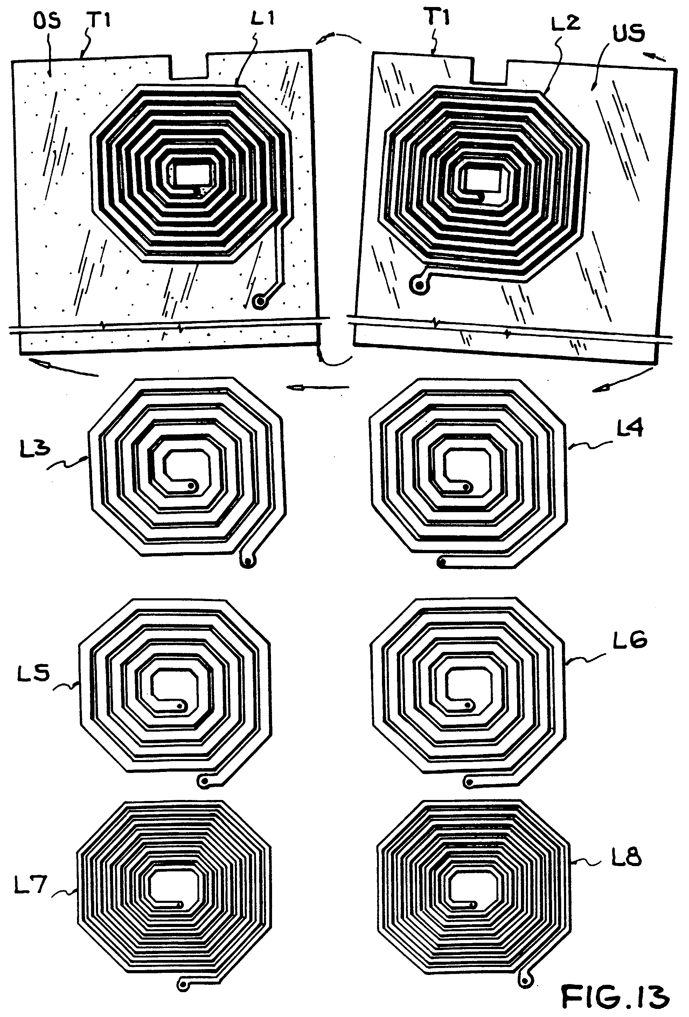

Die Figur 12 zeigt die aus dem gepulsten Ladestrom entstehenden Stufen auf der Rampenfunktion RG. Man beachte die unterschiedlichen Zeitachsen der Figuren 11 und 12. Durch die abgestufte Rampenflanke wird der Vergleich mit der Spannungsreferenz verbessert und somit ein Jittern des Impulsbreitenmodulators verhindert.

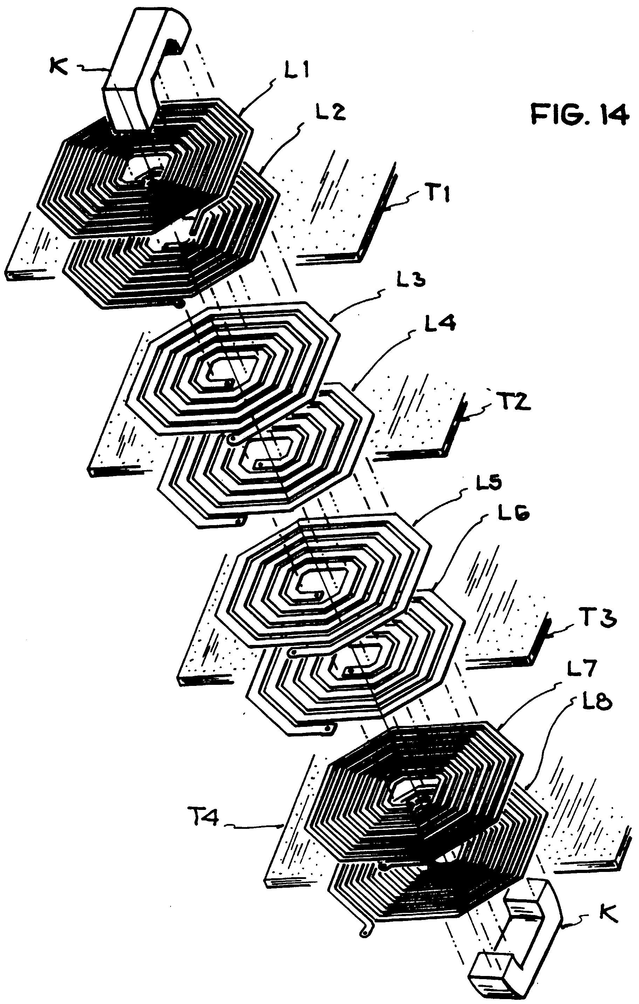

Die Figur 13 zeigt ein Ausführungsbeispiel der Speicherdrossel Ldes Schaltreglersystems in einer Ausführung als Flachspule in Multilayer-Bauweise. Die jeweils gegenüberliegenden Spulenpaare L1-L2, L3-L4, L5-L6, L7-L8 bilden jeweils Ober- und Unterseite OS, US einer auf einem Trägermaterial T1-T4 aufgetragenen metallischen Flachspule. Die Paare werden zusammengefügt und im Zentrum der Wicklung miteinander verbunden, so daß je ein Spulenpaar entsteht, das auf der einen Seite des Trägermaterials von außen nach innen und auf der anderen Seite der Trägerschicht von innen nach außen verläuft, ohne daß sich dabei die Wicklungsrichtung ändert. Die einzelnen Spulenpaare werden unter Einfügung je einer Isolierschicht aufeinandergepackt und an den äußeren Endpunkten der Wicklung mit dem Anfang des darauffolgenden Spulenpaars verbunden. An diesen Verbindungspunkten werden auch die Mittenanzapfungen der Speicherdrossel herausgeführt. Ein besonderer Vorteil dieser Anordnung liegt darin, daß je nach Strombelastung der Teilspulen der Speicherdrossel L durch die einzelnen Schalter des Schaltreglersystems, die Leitbahnbreite und die Wicklungszahlen verändert werden können. Im vorliegenden Ausführungsbeispiel sind die beiden mittleren Spulenpaare L3-L4, L5-L6, die jeweils die hohe Strombelastung im Aufwärtswandlerbetrieb des Reglersystems tragen, mit entsprechend breiten Leitbahnen versehen. Die Leitbahnbreiten der beiden äußeren Spulenpaare L1-L2, L7-L8, die einer wesentlich geringeren Strombelastung ausgesetzt sind, sind kleiner als die der beiden inneren Spulenpaare L3-L4, L5-L6. Gleichzeitig sind die Wicklungszahlen größer. Die so aufgebaute Speicherdrossel L weist weiterhin einen ringförmigen Kern K auf, der senkrecht zur Wicklungsebene die Speicherdrossel L vom Zentrum der Wicklungen zum Rand hin umschließt (2 "U-Kerne"). Die Kernabmessungen und die Kernform sind der Flachspule angepaßt. Der Kern K wird an die Wicklung und nicht die Wicklung an den Kern angepaßt. Die Figur 14 zeigt die Speicherdrossel in einer perspektivischen Darstellung. Die Speicherdrossel in Multilayer-Bauweise weist gegenüber konventionellen Speicherdrosseln folgende Vorteile auf: eine Verringerung der Energiedichte, geringe Kapazitäten zwischen den Wicklungen, geringe Streuinduktivitäten, geringe Eigenschwingungsneigung in den Umschaltmomenten bei gleichzeitiger Verringerung der Kerngröße und einem vereinfachten Herstellverfahren.

Durch die Kombination der hier beschriebenen Verbesserungen entsteht ein neuartiges Schaltreglersystem, das zwei an sich bekannte Wandlerkonzepte mit vollkommen unterschiedlichen Charakteristiken zu einem neuartigen Reglersystem verknüpft. Dieses neuartige Schaltreglersystem weist einen erheblich ausgedehnten Regelbereich mit einem fließenden Übergang zwischen den Teilwandlern auf. Gleichzeitig wird eine gemeinsame Speicherdrossel von beiden Wandlertypen gemeinsam ausgenutzt.

## Patentansprüche

1. Schaltreglersystem zum Wandeln einer Eingangsspannung (U_{E}) in eine Ausgangsspannung (U_{A}) mit einem Regelverstärker (600) und einem Pulsbreitenmodulator (500) in der Regelschleife und einer Leistungsendstufe (800) mit Speicherdrossel (L) als Regelstrecke, wobei die Leistungsendstufe einen Abwärtswandler (T801, D802, L) und einen Aufwärtswandler (L, T803, D803) aufweist, so daß ein Eingangsspannungsbereich von U_{E} < U_{A} bis U_{E} > U_{A} vom Schaltreglersystem ausgeregelt werden kann und die Speicherdrossel (L) vom Abwärtswandler (T801, D802, L) und vom Aufwärtswandler (L, T803, D803) gemeinsam genutzt wird, dadurch gekennzeichnet, daß die dem Abwärts- und dem Aufwärtswandler gemeinsame Speicherdrossel (L) zwei Endanzapfungen und zwei Mittenanzapfungen aufweist, daß der Schalter des Abwärtswandlers (T801) im geschlossenen Zustand die Eingangsspannung (U_{E}) über eine erste Diode (D801) in Flußrichtung mit der eingangsseitigen Endanzapfung der Speicherdrossel (L) und über eine zweite Diode (D802) in Sperrichtung mit dem Massepotential (GND) verbindet, daß der Schalter des Aufwärtswandlers (T803) im geschlossenen Zustand die ausgangsseitige Mittenanzapfung der Speicherdrossel (L) mit dem Massepotential (GND) verbindet, daß die ausgangsseitige Endanzapfung der Speicherdrossel (L) über eine dritte Diode (D803) mit einem Filterkondensator (C) verbunden ist, an dem die Ausgangsspannung (U_{A}) abgegriffen wird, und daß ein weiterer Schalter (T802) vorgesehen ist, der im geschlossenen Zustand die eingangsseitige Mittenanzapfung der Speicherdrossel (L) mit der Eingangsspannung (U_{E}) verbindet.

2. Schaltreglersystem nach Anspruch 1, dadurch gekennzeichnet, daß der Schalter des Abwärtswandlers (T801) durch das pulsbreitenmodulierte Steuersignal (PWM) des Pulsbreitenmodulators (500) angesteuert wird.

3. Schaltreglersystem nach Anspruch 1 oder 2, dadurch gekennzeichnet, daß der Schalter des Aufwärtswandlers (T803) und der weitere Schalter (T802) nur dann angesteuert werden, wenn die Eingangsspannung im unteren Bereich liegt.

4. Schaltreglersystem nach einem der Ansprüche 1 bis 3, dadurch gekennzeichnet, daß ein Spannungsdetektor (101) vorgesehen ist, der ein Spannungsdetektionssignal (LVD) erzeugt, das anzeigt, ob die Eingangsspannung (U_{E}) im unteren Bereich liegt.

5. Schaltreglersystem nach Anspruch 4, dadurch gekennzeichnet, daß eine Logikstufe (300) vorgesehen ist, die das Spannungsdetektionssignal (LVD) mit dem pulsbreitenmodulierten Steuersignal (PWM) und einem Taktsignal zu einem zweiten Steuersignal (VLV) verknüpft, welches den Schalter des Aufwärtswandlers (T803) ansteuert.

6. Schaltreglersystem nach Anspruch 5, dadurch gekennzeichnet, daß die Logikstufe (300) weiterhin das Spannungsdetektionssignal (LVD) mit dem pulsbreitenmodulierten Steuersignal (PWM) zu einem dritten Steuersignal (LVR) verknüpft, welches den weiteren Schalter (T802) ansteuert.

7. Schaltreglersystem nach einem der Ansprüche 1 bis 6, dadurch gekennzeichnet, daß die Schalter des Abwärts- und des Aufwärtswandlers (T801, T803) und der weitere Schalter (T802) Schalttransistoren sind.

8. Schaltreglersystem nach Anspruch 7, dadurch gekennzeichnet, daß den Basiselektroden der jeweiligen Schalttransistoren (T801 - T803) das zugeordnete Steuersignal (PWM, LVR, VLV) zugeführt wird.

9. Schaltreglersystem nach Anspruch 7, dadurch gekennzeichnet, daß die Schalttransistoren (T801 - T803) von getakteten Stromquellen (T805 - T807) angesteuert werden, die ihrerseits von den jeweiligen Steuersignalen (PWM, LVR, VLV) getaktet werden.

10. Schaltreglersystem nach Anspruch 9, dadurch gekennzeichnet, daß die getakteten Stromquellen aus je einem Stromquellentransistor mit je einer im Emitterzweig liegenden Parallelschaltung eines strombestimmenden Widerstands und eines Kondensators bestehen, so daß der jeweilige Stromquellentransistor im Einschaltmoment übersteuert und kurzzeitig als Verstärker arbeitet.

## Claims

1. A switching controller system for converting an input voltage (U_{E}) into an output voltage (U_{A}) comprising a control amplifier (600) and pulse width modulator (500) in the control loop, and a power end stage (800) with storage choke (L) as controlled system, wherein the power end stage has a down converter (T801, D802, L) and an up converter (L, T803, D803) so that an input voltage range of U_{E} < U_{A} to U_{E} > U_{A} can be corrected by the switching controller system, and the storage choke (L) is commonly used by the down converter (T801, D802, L) and the up converter (L, T803, D803), characterised in that the storage choke (L), which is common to the down converter and the up converter, has two end tappings and two central tappings, that in the closed state the switch of the down converter (T801) connects the input voltage (U_{E}) via a first diode (D801) in the forwards direction to the input-side end tapping of the storage choke (L) and via a second diode (D802) in the reverse direction to the earth potential (GND), that in the closed state the switch of the up converter (T803) connects the output-side central tapping of the storage choke (L) to the earth potential (GND), that the output-side end tapping of the storage choke (L) is connected via a third diode (D803) to a filter capacitor (C) from which the output voltage (U_{A}) is tapped, and that a further switch (T802) is provided which in the closed state connects the input-side central tapping of the storage choke (L) to the input voltage (U_{E}).

2. A switching controller system according to Claim 1, characterised in that the switch of the down converter (T801) is actuated by the pulse-width-modulated control signal (PWM) of the pulse width modulator (500).

3. A switching controller system according to Claim 1 or 2, characterised in that the switch of the up converter (T803) and the further switch (T802) are actuated only when the input voltage is in the lower range.

4. A switching controller system according to one of Claims 1 to 3, characterised in that a voltage detector (101) is provided which generates a voltage detection signal (LVD) which indicates whether the input voltage (U_{E}) is in the lower range.

5. A switching controller system according to Claim 4, characterised in that a logic stage (300) is provided which logic-links the voltage detection signal (LVD) to the pulse-width-modulated control signal (PWM) and to a clock signal to form a second control signal (VLV) which actuates the switch of the up converter (T803).

6. A switching controller system according to Claim 5, characterised in that the logic stage (300) also logic-links the voltage detection signal (LVD) to the pulse-width-modulated control signal (PWM) to form a third control signal (LVR) which actuates the further switch (T802).

7. A switching controller system according to one of Claims 1 to 6, characterised in that the switches of the down converter and of the up converter (T801, T803) and the further switch (T802) are switching transistors.

8. A switching controller system according to Claim 7, characterised in that the base electrodes of the respective switching transistors (T801 - T803) are supplied with the assigned control signal (PWM, LVR, VLV).

9. A switching controller system according to Claim 7, characterised in that the switching transistors (T801 - T803) are driven by clocked current sources (T805 - T807) which are themselves clocked by the respective control signals (PWM, LVR, VLV).

10. A switching controller system according to Claim 9, characterised in that the clocked current sources each consist of a current source transistor in each case with a parallel circuit, arranged in the emitter arm, comprising a current-determining resistor and a capacitor, so that at the instant of switch-on the respective current source transistor is overmodulated and temporarily operates as amplifier.

## Revendications

1. Système régulateur à découpage pour convertir une tension d'entrée (U_{E}) en une tension de sortie (U_{A}), comportant un amplificateur à gain variable (600) et un modulateur de largeur d'impulsion (500) dans la boucle de régulation ainsi qu'un étage final de puissance (800) avec bobine de réactance servant d'accumulateur (L) comme élément de circuit de régulation, dans lequel l'étage final de puissance présente un convertisseur abaisseur de tension (T801, D802, L) et un convertisseur élévateur de tension (L, T803, D803) de sorte que c'est une plage de la tension d'entrée allant de U_{E} < U_{A} jusqu'à U_{E} > U_{A} qui peut être entièrement régulée par le système régulateur à découpage et dans lequel la bobine de réactance servant d'accumulateur (L) est utilisée en commun par le convertisseur abaisseur de tension (T801 D802, L) et par le convertisseur élévateur de tension L, T803, D803), caractérisé par le fait que la bobine de réactance, servant d'accumulateur, (L), commune au convertisseur abaisseur de tension et au convertisseur élévateur de tension présente deux prises d'extrémité et deux prises médianes, qu'à l'état fermé, l'interrupteur du convertisseur abaisseur de tension (T801), relie, par l'intermédiaire d'une première diode (D801), orientée dans le sens passant, la tension d'entrée (U_{E}) avec la borne d'extrémité, située du côté de l'entrée, de la bobine de réactance servant d'accumulateur (L) et, par l'intermédiaire d'une deuxième diode (D802) orientée dans le sens bloqué, avec le potentiel de masse (GND), qu'à l'état fermé, l'interrupteur du convertisseur élévateur de tension (T803), relie la prise médiane, située du côté de la sortie, de la bobine de réactance servant d'accumulateur (L) avec le potentiel de masse (GND), que la prise d'extrémité, située du côté de la sortie, de la bobine de réactance servant d'accumulateur (L) est reliée, par l'intermédiaire d'une troisième diode (D803), à un condensateur de lissage (C) sur lequel on prélève la tension de sortie (U_{A}) et qu'est prévu un autre interrupteur (T802) qui, à l'état fermé, relie la prise médiane, située du côté de l'entrée de la bobine de réactance servant d'accumulateur (L) à la tension d'entrée (U_{E}).

2. Système régulateur à découpage selon la revendication 1, caractérisé par le fait que l'interrupteur du convertisseur abaisseur de tension (T801) est commandé par le signal de commande (PWM), modulé en largeur d'impulsion, du modulateur de largeur d'impulsion (500).

3. Système régulateur à découpage selon la revendication 1 ou 2, caractérisé par le fait que l'interrupteur du convertisseur élévateur de tension (T803) et l'autre interrupteur (T802) ne sont commandés que lorsque la tension d'entrée se situe sur la plage inférieure.

4. Système régulateur à découpage selon l'une des revendications 1 à 3, caractérisé par le fait qu'est prévu un détecteur de tension (101) qui produit un signal (LVD) de détection de tension qui indique si la tension d'entrée (U_{E}) se trouve sur la plage inférieure.

5. Système régulateur à découpage selon la revendication 4, caractérisé par le fait qu'est prévu un étage logique (300) qui relie logiquement le signal (LVD) de détection de la tension avec un signal de commande (PWM) modulé en largeur d'impulsion et un signal de cadencement pour donner un second signal de commande (VLV) qui commande l'interrupteur du convertisseur élévateur de tension (T803).

6. Système régulateur à découpage selon la revendication 5, caractérisé par le fait que l'étage logique (300) relie en outre logiquement le signal (LVD) de détection de la tension avec le signal de commande (PWM) modulé en largeur d'impulsion pour donner un troisième signal de commande (LVR) qui commande l'autre interrupteur (T802).

7. Système régulateur à découpage selon l'une des revendications 1 à 6, caractérisé par le fait que les interrupteurs du convertisseur abaisseur de tension et du convertisseur élévateur de tension (T801, T803) et l'autre interrupteur (T802) sont des transistors à commutation.

8. Système régulateur à découpage selon la revendication 7, caractérisé par le fait que l'on amène aux électrodes de base les transistors de commutation en question (T801 - T803) le signal de commande correspondant (PWM, LVR, VLV).

9. Système régulateur à découpage selon la revendication 7, caractérisé par le fait que les transistors de commutation (T801 - T803) sont commandés par des sources de courant cadencées (T805- T807) qui de leur côté sont activées en cadence par les signaux de commande respectifs (PWM, LVR, VLV).

10. Système régulateur à découpage selon la revendication 9, caractérisé par le fait que les sources de courant cadencées sont chacune constituée d'un transistor formant source de courant avec, chacun, un circuit parallèle situé dans la branche de l'émetteur et constitué d'une résistance déterminant l'intensité et d'un condensateur, de sorte que le transistor formant source de courant en question fait l'objet d'une commande prioritaire au moment de devenir conducteur et travaille brièvement en tant qu'amplificateur.
